## Europäisches Patentamt
## European Patent Office
## Office européen des brevets

(19)

(11) Veröffentlichungsnummer: **0 033 124**
**A1**

(12) **EUROPÄISCHE PATENTANMELDUNG**

(21) Anmeldenummer: **81100398.7**

(22) Anmeldetag: **20.01.81**

(51) Int. Cl.³: **G 01 S 13/80**
**B 61 L 25/02**

(30) Priorität: **25.01.80 DE 3002727**

(43) Veröffentlichungstag der Anmeldung:
**05.08.81 Patentblatt 81/31**

(84) Benannte Vertragsstaaten:
**AT BE CH DE FR GB IT LI LU NL SE**

(71) Anmelder: **SIEMENS AKTIENGESELLSCHAFT Berlin und München**
**Postfach 22 02 61**
**D-8000 München 22(DE)**

(72) Erfinder: **Vogel, Klaus, Dipl.-Ing.**
**Kranzelstrasse 15**
**D-8192 Geretsried/Gelting(DE)**

(54) System zur Identifizierung von Gegenständen und Personen und zur Informationsübermittlung.

(57) Die Erfindung bezieht sich auf ein System zur Identifizierung von Gegenständen und Personen und zur Informationsübermittlung, bestehend aus einem Lesegerät (LG) und einem am zu identifizierenden Objekt bzw. am Ort der Informationsablage angebrachten Informationsträger (Kennungsanordnung KA), der (die) die vom Lesegerät (LG) ankommenden elektromagnetischen Lesesignale mit einer Vielzahl, den Informationsinhalt darstellenden, verzögerten Echos über ein Funkfeld (F) zum Lesegerät (LG) zurückstrahlt. Die Identifizierung und Informationsübermittlung soll bei einfachem Aufbau des Systems störungs-und fälschungssicher erfolgen. Die Erfindung sieht hierzu vor, daß vom Lesegerät (LG) frequenz-, phasen- oder amplitudenmodulierte Leseimpulse zum Informationsträger (Kennungsanordnung KA) gesendet und von diesem den Informationsinhalt darstellende Echoimpulse der Verzögerungszeit $\tau_x$ zurückgestrahlt werden, die in Bezug auf den Leseimpuls eine Mindestverzögerung $\tau_0$ nicht unterschreiten und gegenüber vom Leseimpuls ausgelösten, von weiter entfernten Störreflexionsstellen kommenden Störreflexionen einen vorgegebenen Störabstand aufweisen. Die empfangenen Echoimpulse werden im Lesegerät (LG) nach entsprechender Demodulation und Verstärkung über einen durch eine Taktaufbereitung (T) gesteuerten Zeitfensterschalter (12) nachfolgenden Auswerteschaltungen zugeführt und auf feste Bit-Plätze verteilt. Ein erfindungsgemäßes System ist für Kennungsanordnungen aller Art, beispielsweise auch in Verkehrssystemen, geeignet.

FIG 1

EP 0 033 124 A1

SIEMENS AKTIENGESELLSCHAFT          Unser Zeichen
Berlin und München                  VPA
                                     80 P 6 5 1 2 E

## System zur Identifizierung von Gegenständen und Personen und zur Informationsübermittlung

Die Erfindung bezieht sich auf ein System zur Identifizierung von Gegenständen und Personen und zur Informationsübermittlung, bestehend aus einem Lesegerät und einem am zu identifizierenden Objekt bzw. am Ort der Informationsablage angebrachten Informationsträger (Kennungsanordnung), der (die) die vom Lesegerät ankommenden elektromagnetischen Lesesignale mit einer Vielzahl, den Informationsinhalt (Bit-Inhalt) darstellenden, verzögerten Echos über ein Funkfeld zum Lesegerät zurückstrahlt.

Entsprechende Einrichtungen zu Identifizierung von Gegenständen und Personen sind in früheren Patentanmeldungen der Anmelderin behandelt. Dabei wird in der Patentanmeldung P 28 21 299.9 vor allem die Kennungsanordnung einer solchen Einrichtung, in der Patentanmeldung P 28 33 509.3 das Lesegerät beschrieben.

Der Erfindung liegt die Aufgabe zugrunde, für ein System der eingangs beschriebenen Art eine Lösung anzugeben, durch die eine störungs- und fälschungssichere Identifizierung und Informationsübermittlung in einfacher Weise gewährleistet ist und die die Verwendung eines solchen Systems insbesondere zur Sicherung und Verbesserung des straßengebundenen Verkehrs ermöglicht.

Klu 1 Mai / 25.1.80

Diese Aufgabe wird gemäß der Erfindung in der Weise gelöst, daß vom Lesegerät frequenz-, phasen- oder amplitudenmodulierte Leseimpulse zum Informationsträger gesendet und von diesem den Informationsinhalt darstellende Echoimpulse der Verzögerungszeit $\tau_x = f \cdot \tau_B$ (f = ganzzahlig, $\tau_B$ = ein kleinster, allen Echoimpulsen gemeinsamer Laufzeitbruchteil) zurückgestrahlt werden, die in Bezug auf den Leseimpuls eine Mindestverzögerung $\tau_0 = e \cdot \tau_B$ (e = ganzzahlig) nicht unterschreiten und die gegenüber vom Leseimpuls ausgelösten, gleichzeitig am Lesegerät ankommenden Störreflexionen von weiter entfernten Störreflexionsstellen wegen des durch $\tau_0$ bestimmten längeren Störfunkfeldes am Lesegerät einen vorgegebenen Störabstand aufweisen, und daß die vom Lesegerät empfangenen Echoimpulse je nach Signalart in Frequenz-, Phasen- oder Amplitudendemodulatoren demoduliert und verstärkt und anschließend in solchen Zeitintervallen über einen durch eine Taktaufbereitung gesteuerten Zeitfensterschalter an nachfolgende Auswerteschaltungen weitergegeben werden, innerhalb derer, bedingt durch im Informationsträger genau vorgegebene und tolerierte Echolaufzeiten, aus einem vorgegebenen Raumbereich Echoimpulse von zu lesenden Informationsträgern zurückerwartet werden, und daß durch die von der Taktaufbereitung gesteuerten Auswerteschaltungen die nacheinander in minimal möglichen Zeitabständen $\tau_B$ eintreffenden Echosignale nacheinander so auf feste Bit-Plätze verteilt werden, daß jedem der möglichen, den Informationsinhalt darstellenden Echoimpulse $\tau_x$ ein fester Platz zugeordnet ist, der für die gleichzeitige, parallele Auslesung von nachgeschalteten Auswerteeinrichtungen geeignet ist.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen

Fig. 1 und 2 das Blockschaltbild einer mit PM-Impulsen arbeitenden Einrichtung und ein zugehöriges Impulsdiagramm,

Fig. 3 das Blockschaltbild einer weiteren, mit PM-Impulsen arbeitenden Einrichtung und

Fig. 4 das Blockschaltbild einer mit AM-Impulsen arbeitenden Einrichtung.

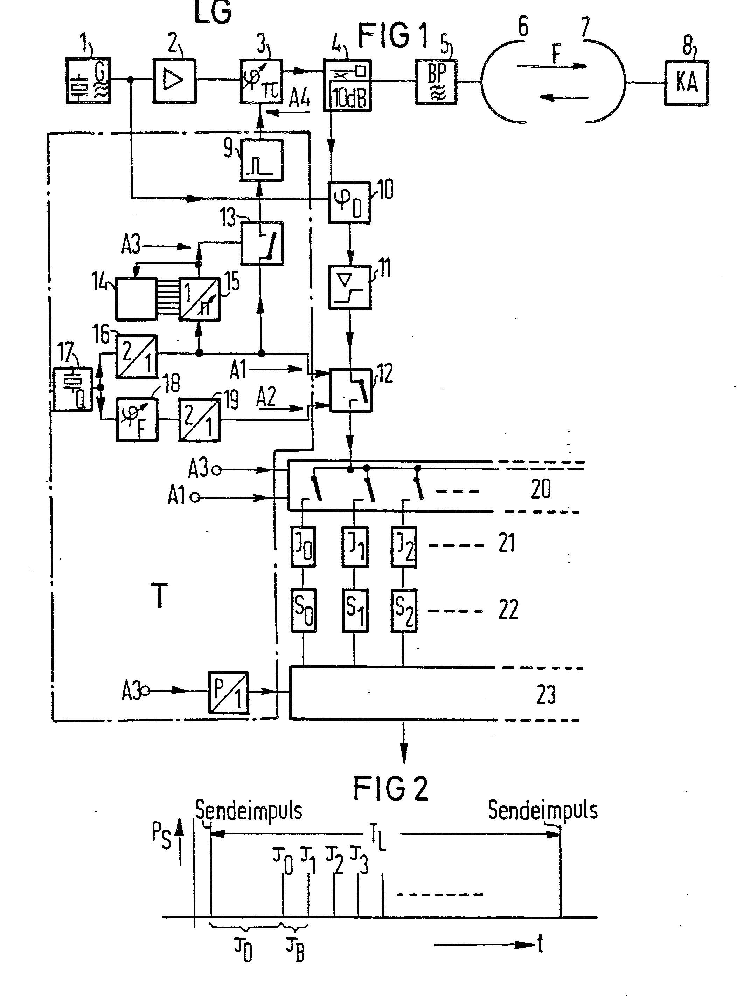

Im Blockschaltbild nach Fig. 1 ist das Lesegerät LG in einer detaillierten Darstellung gezeigt. Es ist mit einer Antenne 6 verbunden, die über ein Funkfeld F mit einer Antenne 7 der Kennungsanordnung 8 (KA) in Verbindung steht. Das Lesegerät LG enthält im Sendezweig einen Generator 1, der die Sendefrequenz erzeugt, einen Verstärker 2, einen nachgeschalteten Phasenmodulator φ und ein Dämpfungsglied π, die im Blockschaltbild in dem Kästchen 3 zusammengefügt sind, sowie einen Richtkoppler 4 und ein mit der Antenne 6 verbundenes Bandbegrenzungsfilter 5. Der Verstärker 2 verstärkt das Signal so, daß an der Antenne 6 die vorgesehene Sendeleistung verfügbar wird. Er entkoppelt zudem den nachgeschalteten Phasenmodulator φ vom Generator 1. An den Phasenmodulator φ ist ein schneller Monoflop 9 angeschaltet, der über einen Schalter 13 von einem Signal A1 getriggert wird und durch den über den Phasenmodulator φ der Phasenleseimpuls mit z.B. 180° Phasenmodulation auf die Sendefrequenz aufgeprägt wird. Über das Dämpfungsglied π sowie den Koppler 4 (beispielsweise ein 10-dB-Koppler), der den Phasenmodulator φ von der Antenne 6 entkoppelt und zudem die Empfängerrauschzahl um nur ca. 0,4 dB erhöht, und über das Bandbegrenzungsfilter 5, die Antenne 6 und das Funkfeld F gelangen Träger und aufgeprägter Leseimpuls zur Kennungsanordnung 8. Das Bandbegrenzungsfilter 5 dient dabei der Begrenzung der Empfängerrauschbandbreite und bewirkt eine Verbesserung der Gerätestörbeeinflussung.

Die verschiedenen Laufzeitleitungen der Kennungsanordnung, definiert lange und verschieden stark dämpfende Oberflächenwellen-Laufzeitleitungen auf z.B. Quarz- oder Lithiumniobatsubstraten, wandeln den Phasenimpuls in eine Phasenimpulsfolge mit genau von der Kennungsanordnung definierten kleinstmöglichen Folgeabständen $\tau_B$ um, die den Informationsinhalt der Kennungsanordnung darstellen. Die rein passiv verzögerte Pulsfolge wird über das Funkfeld F zurückgestrahlt und gelangt über die Antenne 6 und den Koppler 4 zu einem rauscharmen Phasendetektor 10 im Empfangszweig des Lesegerätes LG. Ein zweiter Eingang des Phasendetektors 10 ist an den Generator 1 angeschlossen. Zum Rückkehrzeitpunkt der Pulsfolge nach der Zeit $\tau_0$, die neben der auf z.B. 0,1 nsec präzisen Grundlaufzeit der Kennungsanordnung KA noch Laufzeitanteile des Funkfeldes und Lesegerätes enthält, ist das Signal des Generators 1 unmoduliert und dient als Referenzphase für die Impulsfolge. Der Phasendetektor 10 ist so ausgelegt, daß seine Phasenempfindlichkeit unabhängig von der Absolutphase des Empfangssignales stets optimal ist. Er besteht beispielsweise aus zwei um 90° versetzten Detektoren mit Basisbandadditionsschaltung. In einem dem Phasendetektor 10 nachfolgenden, breitbandigen, rauscharmen und z.B. logarithmischen Verstärker 11 wird das Nutzsignal des Phasendetektors auf ausreichende Pegel für die Weiterverarbeitung verstärkt.

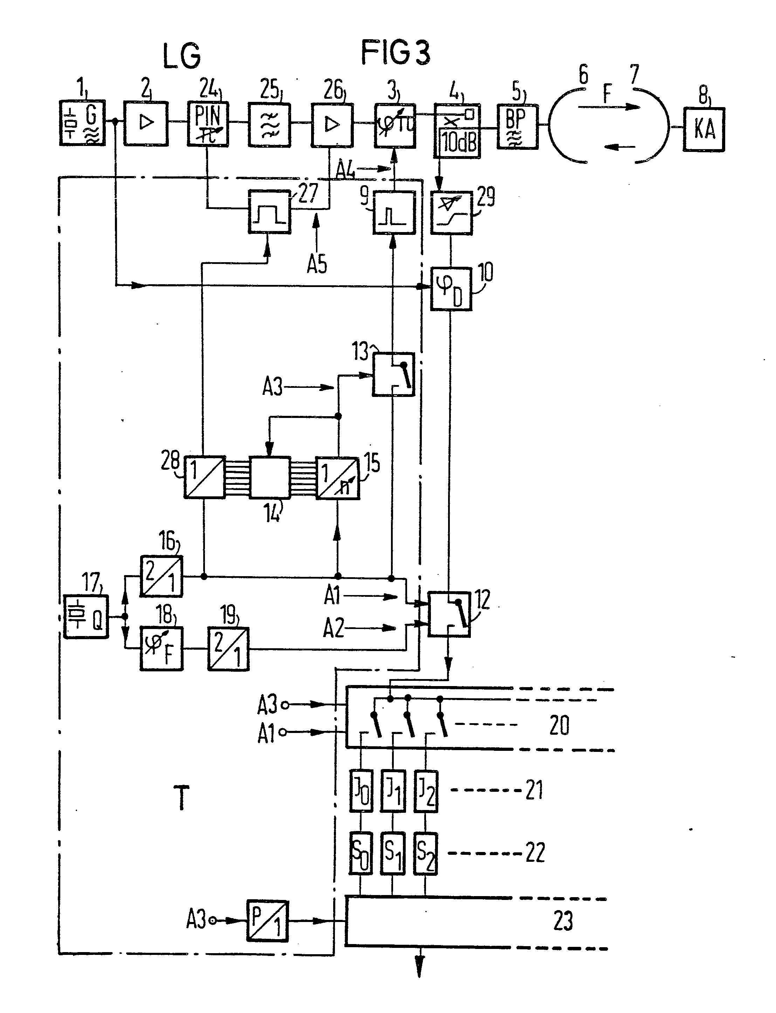

Aufgrund der mit den vorhandenen Technologien möglichen hohen Laufzeitpräzision der Kennungsanordnung ist sehr genau bekannt, zu welchen Zeitpunkten nach Abgabe des Sendeimpulses die Antwortimpulse aus einem vorgegebenen, eng begrenzten Lesedurchmesser spätestens eintreffen müssen, nämlich zu den Zeiten $\tau_0$, $\tau_1$, $\tau_2$, ... $\tau_x = f \cdot \tau_B$ wobei $\tau_0 = e \cdot \tau_B$ eine Mindestverzögerung ist, die die Echoimpulse in Bezug auf den Leseimpuls aufweisen. e ist in dieser Gleichung ein ganzzahliger Wert, $\tau_B$ ist ein kleinster, allen Echoimpulsen gemeinsamer Laufzeitbruchteil. $\tau_B$ ist also z.B. der Abstand zwischen den einzelnen Antwortimpulsen, nämlich zwischen $\tau_0$ und $\tau_1$, $\tau_1$ und $\tau_2$ usw. (vgl. Fig. 2).

Durch auf die entsprechenden Antwortimpulse abgestimmte, mit einem sehr schnellen Fensterschalter 12 erzeugte Zeitfenster lassen sich alle jene Antwortimpulse ausschließen, welche von Kennungsanordnungen außerhalb des eng begrenzten Lesedurchmessers, z.B. 3 m, stammen und die damit eine zu hohe Laufzeit aufweisen. Somit ist eine scharf begrenzte Raumauflösung gewährleistet.

Dem dem Verstärker 11 nachfolgenden Fensterschalter 12 ist ein Verteilerschalter 20 nachgeschaltet, mittels dem die durch den Fensterschalter 12 ausgesiebten Nutzsignale im Takt der Bitinformation auf die einzelnen möglichen Bitplätze verteilt werden. Der Verteilerschalter 20 enthält z.B. eine Vielzahl parallel liegender Schalter, denen jeweils ein Integrator I0, I1, I2 ... In (21) und gegebenenfalls einstellbare Schwellen S0, S1, S2 ... Sn (22) nachgeschaltet sind. Die Integratoren I0 ... In am Ausgang jedes einzelnen Bitplatzes integrieren über z.B. jeweils ungefähr $10^4$ Lesungen der Kennungsanordnung (das entspricht bei 65 Bit Informationsinhalt einer Fahrzeuggeschwindigkeit von 200 km/h, einem Einflußbereich von 3 m, $\tau_B$ = 70 nsec und $\tau_0$ = 1400 nsec 8 . $10^3$ möglichen Lesungen). Durch diese Signalintegration kann der Signal-Geräuschabstand um mehr als 20 dB verbessert werden, und auch die Störsicherheit gegen Fremdstörer und gegen Störungen durch benachbarte Lesegeräte wird um ähnliche Beträge erhöht. Über die einstellbaren Schwellen 22, die es gestatten, den Bit-Abstand $\tau_B$ zu reduzieren und eine zusätzliche Möglichkeit zur Verhinderung der Lesung benachbarter Kennungsanordnungen ergeben, gelangt der Bit-Inhalt in eine Auswerte- und Informationseinrichtung 23, die den Bit-Code, z.B. 2 aus 5-Code, im Rhythmus eines Bruchteiles p/1 der Lesefrequenz überprüft und bei fehlerfrei gelesenem Code die gesamte Bit-Information entsprechend der Systemaufgabe auswertet und weitergibt.

Die erforderliche präzise und teilweise sehr schnelle Steuerung (z.B. kleiner 0,5 nsec Schaltzeit) des Phasenmodulators φ, des Fensterschalters 12, des Verteilerschalters 20 und der Auswerteschaltung 23 erfolgen über eine vereinfacht dargestellte zentrale Ablaufsteuerung T. Diese enthält einen Quarzgenerator 17, dessen Frequenz auf $\tau_B$ und $\tau_{OKA}$ (Laufzeit der Kennungsanordnung) abgestimmt ist. Seine Frequenz wird in zwei Zweige aufgeteilt in denen die Frequenz z.B. von schnellen Teilern 16, 19 (Teilungsverhältnis 2/1 im dargestellten Fall) in digitale Form gebracht werden kann. In einem Zweig ist vor dem Teiler zusätzlich ein einstellbarer Phasenschieber 18 eingeschaltet, mit dem die Länge $t_f$ des Zeitfensters und dementsprechend die Lesereichweite eingestellt werden kann. Die Ausgangssignale A1 und A2 der Teiler 16 bzw. 19 bilden die Steuersignale für das Zeitfenster 12. Die Perioden-

0033124

80 P 6512 E

dauer der Signale ist exakt auf den sehr konstanten Laufzeitunterschied $\tau_B$ der aufeinanderfolgenden Antwort-impulse aus der Kennungsanordnung KA abgestimmt. Die Zeit $\tau_{OKA}$ der Kennungsanordnung ist für das Laufzeitelement der Kennungsanordnung so vorgegeben, daß die Bit-Folge genau in das periodische Fensterraster von A1 und A2 paßt ($\tau_{OKA} = e \cdot \tau_B$).

Damit eine gegenseitige Störung eng benachbarter Lesestellen nicht erfolgen kann, dürfen vom Leseimpuls des störenden Gerätes nicht immer dieselben Bit's des gestörten Gerätes getroffen werden. Dies läßt sich dadurch sicher erreichen, daß die einzelnen Leseimpulse mit einer quasistatischen, variierenden Periodendauer $T_L$ aufeinanderfolgen. So werden bei z.B. $10^3$ Einzel-lesungen pro Bit, je nach Länge der quasistatischen Periode, nur wenige dieser Lesungen durch den Leseimpuls des Nachbargerätes verfälscht. Die anschließende Integration in den Integratoren 21 über die hohe Zahl von Einzellesungen beseitigt die vereinzelten Bit-Fehler vollkommen. Bei einem um 30 dB höheren Störals Nutzsignal reichen etwa 100 Lesungen dazu bereits aus.

Die quasistatistische Variation der Leseperiodendauer wird dadurch erreicht, daß der Leseimpuls aus dem Signal A1 des einen Zweiges des Quarzgenerators 17 statt durch einen festen Teilungsvaktor n durch ein variabel einstellbares Teilungsverhältnis eines Teilers 15 erzeugt wird. Diese Einstellung erfolgt mit einem entsprechend langen, rückgekoppelten Schieberegister 14, das mit dem Takt des Leseimpulses geschoben wird. Der einstellbare Teiler 15 ist mit dem an den schnellen Monoflop 9 angeschlossenen Schalter 13 ver bunden. Da die Laufzeiten des Teilers 15 temperaturabhängig sind, der Leseimpuls jedoch in exakter Zeitrelation zu den Signalen A1 und A2 erfolgen muß,
schließt das Signal A3 des Teilers 15 den Schalter 13,
der die zeitexakte Triggerflanke des Signales A2 an den
schnellen Monofloß 9 weitergibt, jeweils nur kurzzeitig.
Der Monoflop 9 erzeugt damit den zeitexakten, kurzen
(beispielsweise 20 nsec) Phasen-Leseimpuls über den
Phasenmodulator φ.

Fig. 3 zeigt eine Einrichtung für phasenmodulierte Leseimpulse mit verbesserter Empfängerrauschzahl, die in
ihrem Grundaufbau der in Fig. 1 dargestellten und vorstehend beschriebenen Einrichtung entspricht. Es sollen
daher nur die gegenüber der Fig. 1 unterschiedlichen
Schaltungsteile näher beschrieben werden. Im übrigen
wird auf die Figurenbeschreibung von Fig. 1 verwiesen.
Unterschiedlich ist hierbei, daß kein Dauersignal gesendet wird, dem ein schneller Phasen-Leseimpuls aufgeprägt ist, sondern langsame (Gaußsche) AM-Impulse von
z.B. 1,5 µsec im Takt der Lesefrequenz verwendet werden, die in Pulsmitte den schnellen Phasen-Leseimpuls
tragen. Der AM-Impuls ist dann bereits voll abgeschaltet, wenn, entsprechend der vom Markierungselement der
Kennungsanordnung bestimmten Grundlaufzeit $\tau_0$, die Antwortimpulse am Lesegerät eintreffen. Dadurch wird es
möglich, im Empfangszweig einen sehr rauscharmen, begrenzenden Empfangsvorverstärker 29 direkt auf der
Sendefrequenz zu verwenden, der zwischen dem Koppler 4
und dem Phasendemodulator 10 eingeschaltet ist.

Die Steuerung für die AM-Modulation erfolgt in einfacher Weise dadurch, daß über einen weiteren einstellbaren Zähler 28, der ebenfalls an den einen Zweig des
Quarzoszillators 17 angeschlossen und mit dem Schieberegister 14 verbunden ist, ein weiterer Monoflop 27 angesteuert wird. Die z.B. dreistelligen Teiler 15, 28 mit dem einstellbaren Teilungsfaktor n bzw. m werden vom Schieberegister 14 nur in den ersten beiden Ziffern synchron verstellt, während die kleinsten Ziffern fest und so unterschiedlich verstellt sind, daß der an einen vor dem Phasenmodulator φ liegenden Amplitudenmodulator im Sendezweig des Lesegerätes angeschlossene Monoflip 27 um einige Takte der Frequenz A1 früher gestartet wird als der Phasen-Leseimpuls und erst nach einer derart bemessenen Zeit zurückfällt, daß zusammen mit Pulsformungsmaßnahmen, ein Gauß-Impuls geeigneter Länge entsteht. Die Amplitudenmodulation erfolgt dabei über einen PIN-Schalter 24 und eine nachfolgende Filter-Verstärkerkombination 25, 26, die dafür sorgt, daß einerseits das AM-Spektrum die Bandgrenzen des verwendeten Frequenzbandes nicht überschreitet und andererseits die Sendeamplitude um z.B. mehr als 80 dB abgeschaltet ist, wenn die Antwortimpulse von der Kennungsanordnung KA her eintreffen.

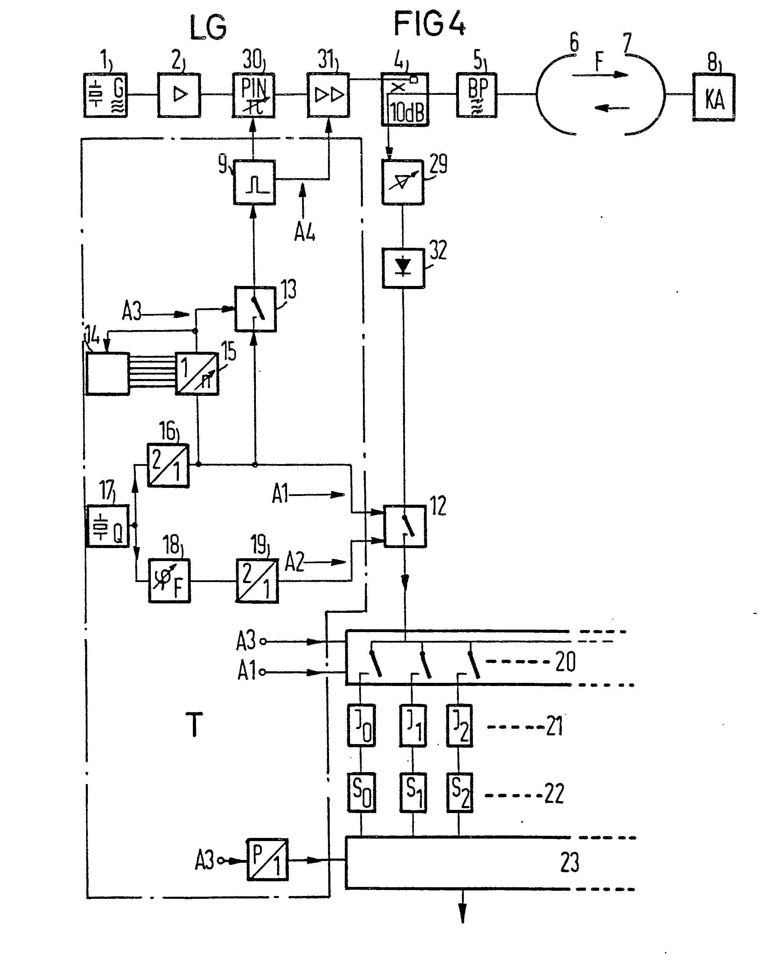

Fig. 4 zeigt eine Ausführungsform, die für amplitudenmodulierte Leseimpulse vorgesehen ist. Im Grundaufbau entspricht die Schaltung der in Fig. 1 dargestellten Einrichtung. Es sollen daher nur die unterschiedlichen Merkmale und Funktionen beschrieben werden; im übrigen wird auf die vorstehenden Beschreibungsteile von Fig. 1 verwiesen.

Bei dieser Einrichtung wird mit sehr kurzen AM-Leseimpulsen, z.B. 20 nsec gearbeitet, die durch den Monoflop 9 in einem im Sendezweig des Lesegerätes LG eingeschalteten Amplitudenmodulator 30 und einem getaste-Verstärker 31 erzeugt werden. Die Amplitudenmodulation erfolgt dabei in entsprechender Weise wie bei der Einrichtung nach Fig. 2, nämlich über einen PIN-Schalter und einen nachgeschalteten Verstärker. Im Empfangszweig des Lesegerätes sind zwischen dem 10-dB-Koppler 4 und dem Fensterschalter 12 ein rauscharmer Vorverstärker 29 und ein Amplitudendetektor 32 eingeschaltet. Die empfangenen Impulsantworten werden in dem Vorverstärker 29 verstärkt und in dem Amplitudendetektor 32 demoduliert und in der bereits beschriebenen Weise ausgewertet. Die Impulssteuerung erfolgt dabei mittels der Taktaufbereitung T in der ebenfalls bereits beschriebenen Weise.

21 Patentansprüche
4 Figuren

Patentansprüche

1. System zur Identifizierung von Gegenständen und Personen und zur Informationsübermittlung, bestehend aus einem Lesegerät und einem am zu identifizierenden Objekt bzw. am Ort der Informationsablage angebrachten Informationsträger (Kennungsanordnung), der (die) die vom Lesegerät ankommenden elektromagnetischen Lesesignale mit einer Vielzahl, den Informationsinhalt (Bit-Inhalt) darstellenden, verzögerten Echos über ein Funkfeld zum Lesegerät zurückstrahlt, d a d u r c h g e k e n n z e i c h n e t , daß vom Lesegerät frequenz-, phasen- oder amplitudenmodulierte Leseimpulse zum Informationsträger gesendet und von diesem den Informationsinhalt darstellende Echoimpulse der Verzögerungszeit $\tau_x = f \cdot \tau_B$ (f = ganzzahlig, $\tau_B$ = ein kleinster, allen Echoimpulsen gemeinsamer Laufzeitbruchteil) zurückgestrahlt werden, die in Bezug auf den Leseimpuls eine Mindestverzögerung $\tau_0 = e \cdot \tau_B$ (e = ganzzahlig) nicht unterschreiten und die gegenüber vom Leseimpuls ausgelösten, gleichzeitig am Lesegerät ankommenden Störreflexionen von weiter entfernten Störreflexionsstellen wegen des durch $\tau_0$ bestimmten längeren Störfunkfeldes am Lesegerät einen vorgegebenen Störabstand aufweisen, und daß die vom Lesegerät empfangenen Echoimpulse je nach Signalart in Frequenz-, Phasen- oder Amplitudendemodulatoren demoduliert und verstärkt und anschließend in solchen Zeitintervallen über einen durch eine Taktaufbereitung gesteuerten Zeitfensterschalter an nachfolgende Auswerteschaltungen weitergegeben werden, innerhalb derer, bedingt durch im Informationsträger genau vorgegebene und tolerierte Echolaufzeiten, aus einem vorgegebenen Raumbereich Echoimpulse von zu lesenden Informationsträgern zurückerwartet werden, und daß durch die von der Taktaufbereitung gesteuerten Auswerteschaltungen die nacheinander in minimal möglichen Zeitabständen $\tau_B$ eintreffenden Echosignale nacheinander so auf feste Bit-Plätze verteilt werden, daß jedem der möglichen, den Informationsinhalt darstellenden Echoimpulse $\tau_x$ ein fester Platz zugeordnet ist, der für die gleichzeitige, parallele Auslesung von nachgeschalteten Auswerteeinrichtungen geeignet ist.

2. System nach Anspruch 1, d a d u r c h  g e - k e n n z e i c h n e t , daß dem Zeitfensterschalter (12) ein von der Taktaufbereitung (T) zeitlich derart gesteuerter Verteilschalter (20) nachgeschaltet ist und daß jeder einzelne Echoimpuls (Bit) entsprechend seiner im Informationsträger enthaltenen Laufzeitkennung auf ein eigenes Integrationsglied (21) (Bit-Platz) gelangt.

3. System nach Anspruch 2, d a d u r c h  g e - k e n n z e i c h n e t , daß die Integrationsglieder (21) hinsichtlich ihrer Zeitkonstante derart bemessen sind, daß bei einer vorgegebenen Wiederholfrequenz der Leseimpulse und einer vorgegebenen minimalen Verweildauer des Informationsträgers im Einflußbereich des Lesegerätes alle je Bit-Platz eintreffenden Echoimpulse nahezu verlustlos aufsummiert werden.

4. System nach einem der Ansprüche 1 bis 3, d a - d u r c h  g e k e n n z e i c h n e t , daß den Integrationsgliedern (21) jeweils ein Schwellenschalter (22) nachgeschaltet ist, der nur solche Signale als Nutz-Echoimpulse weiterleitet, die einen vorgegebenen Störabstand zum Eigenrauschen des Lesegerätes überschreiten.

5. System nach einem der Ansprüche 1 bis 4, d a -
d u r c h   g e k e n n z e i c h n e t , daß den
Integrationsgliedern (21) und gegebenenfalls Schwellenschaltern (22) Auswerteeinrichtungen (23) nachgeschaltet sind.

6. System nach Anspruch 5, d a d u r c h   g e -
k e n n z e i c h n e t , daß die Auswerteeinrichtung (23) von der Taktaufbereitung (T) derart gesteuert ist, daß nach einer jeweils vorgegebenen
Anzahl p (p kleiner als die Zahl der möglichen Leseimpulse bei gegebener Verweildauer des Informationsträgers im Bereich des Lesegerätes) von Leseimpulsen
eine Code-Überprüfung des an den einzelnen Bit-Plätzen
anliegenden Bit-Musters erfolgt mit der Maßgabe der
Weiterleitung des Bit-Musters an die Auswerteschaltung (23) bei positivem Ergebnis der Überprüfung.

7. System nach einem der Ansprüche 1 bis 6, d a -
d u r c h   g e k e n n z e i c h n e t ,    daß die
Taktaufbereitung (T) einen Taktgenerator (17) enthält,
dessen Frequenz zwei, mit jeweils einem Steuereingang
des Zeitfensterschalters (12) verbundenen Zweigen als
digitaler Takt der Frequenz $\frac{1}{\tau_B}$ zugeführt wird, von
denen der eine Zweig einen eine Zeitverschiebung ($t_f$)
bewirkenden einstellbaren Phasenschieber (18) enthält, und daß der Zeitfensterschalter (12) mit im Vergleich zur Taktfrequenz vernachlässigbaren Schalt- und
Verzögerungszeiten einmal pro Periode von einer Flanke
des unverzögerten Signals geschlossen und nach der
Zeit  $t_f$  von einer Flanke des verzögerten Signals
wieder geöffnet wird.

8. System nach Anspruch 7, d a d u r c h   g e -

k e n n z e i c h n e t , daß vom unverzögerten Signal über einen einstellbaren Teiler (15) mit dem Teilungsfaktor n ein Lesefrequenztakt abgeleitet wird, der einen Schalter (13) für eine Zeit etwa $\tau_B$ schließt, während der eine Schaltflanke des unverzögerten Taktes ($\frac{1}{\tau_B}$) über den Schalter (13), einen getriggerten Monoflop (9) sowie einen nachgeschalteten, je nach Modulationsart als Frequenz-, Phasen- oder Amplitudenmodulator ausgebildeten Modulator den Leseimpuls auf das Sendesignal aufmoduliert.

9. System nach Anspruch 7 oder 8, d a d u r c h g e k e n n z e i c h n e t , daß in einem oder beiden an den Taktgenerator (17) angeschalteten Zweigen Teiler (16, 19) eingeschaltet sind.

10. System nach einem der Ansprüche 1 bis 9, d a - d u r c h g e k e n n z e i c h n e t , daß die Leseimpulsdauer statistisch oder quasistatistisch in ihrer Länge derart gesteuert ist, daß die Leseimpulse von eng benachbarten, störenden Lesegeräten nicht stets in das gleiche Zeitfenster desselben Bits im gestörten Lesegerät fallen und einzelne Störimpulse pro Bit durch benachbarte Lesegeräte durch die Signalintegration über viele Leseperioden unterdrückt werden.

11. System nach einem der Ansprüche 8 bis 10, d a - d u r c h g e k e n n z e i c h n e t , daß der die Leseimpulsdauer bestimmende Teiler (15) elektronisch in seinem Teilungsverhältnis so steuerbar ist, daß die Periodendauer eine durch die längste Echozeit der Informationsträger bestimmte Zeit nicht unterschreitet und eine bestimmte, durch die gewünschte hohe Zahl von Lesungen pro Einflußzeit zwischen Lesegerät und Informationsträger festzulegende, maximale Leseperiodedauer nicht überschritten wird.

12. System nach Anspruch 11, d a d u r c h    g e - k e n n z e i c h n e t , daß die Steuerung des Teilers (15) durch einen quasistatistischen Generator (Schieberegister 14) erfolgt, der vom Lesetakt getaktet ist.

13. System nach einem der Ansprüche 1 bis 12, d a - d u r c h    g e k e n n z e i c h n e t , daß die FM-, PM- oder AM-Leseimpulse einem CW-Sendeträger aufmoduliert werden.

14. System nach einem der Ansprüche 1 bis 12, d a - d u r c h    g e k e n n z e i c h n e t , daß die FM-, PM- oder AM-Leseimpulse einen etwa Gauß'schen Verlauf aufweisen.

15. System nach einem der Ansprüche 1 bis 12, d a - d u r c h    g e k e n n z e i c h n e t , daß der FM-, oder PM-Leseimpuls einem 100 % durchmodulierten AM-Sendeimpuls aufmoduliert ist, dessen Impulsdauer kleiner als die Verzögerungszeit $\tau_0$ ist und der vollständig abgeklungen ist beim Eintreffen des ersten Echoimpulses am Lesegerät.

16. System nach einem der Ansprüche 1 bis 15, d a - d u r c h    g e k e n n z e i c h n e t , daß der allen Echolaufzeiten gemeinsame Laufzeitbruchteil $\tau_B$ so groß bemessen ist, daß Echoimpulse von solchen Informationsträgern,die sich weit außerhalb des vorgegebenen, durch das Zeitfenster scharf begrenzten Leseraumes befinden und wegen ihrer erheblich längeren Funkfeldlaufzeiten in das um die Zeit $\tau_B$ verschobene

Zeitfenster fallen, durch die erhöhte Funkfelddämpfung einen vorgegebenen Störabstand zu Echoimpulsen von Informationsträgern im vorgegebenen Leseraum einhalten.

17. System nach einem der Ansprüche 1 bis 16, d a - d u r c h   g e k e n n z e i c h n e t , daß die in den Informationsträgern vorgegebenen Echolaufzeiten eine so geringe Laufzeittoleranz aufweisen, die Leseimpulse so kurz bemessen sind und die Laufzeittoleranzen der Taktaufbereitung, der Sende- und Empfangsbaugruppen sowie aller anderen bis zum Zeitfensterschalter im Lesegerät von den Signalen durchlaufenden Baugruppen so gering bemessen sind, daß die für die Raumauflösung wirksame Summen-Laufzeittoleranz $\Delta\tau_A$ klein genug ist, um eine vorgegebene räumliche Toleranzgrenze

$\Delta r$ $(\Delta r = \dfrac{\Delta\tau_A \cdot c}{2}$ ; c = Lichtgeschwindigkeit) des durch den Zeitfensterschalter scharf begrenzten Lesebereiches zu gewährleisten.

18. System nach einem der Ansprüche 1 bis 17, d a - d u r c h   g e k e n n z e i c h n e t , daß bei Verwendung von PM-Leseimpulsen der Phasendetektor so bemessen ist, daß seine Phasenempfindlichkeit unabhängig von der Absolutphase des Eingangssignals stets optimal ist.

19. System nach Anspruch 18, d a d u r c h   g e - k e n n z e i c h n e t , daß der Phasendetektor aus zwei um $90^\circ$ versetzten Detektoren mit Basisbandadditionsschaltung besteht.

20. System nach einem der vorhergehenden Ansprüche, d a d u r c h   g e k e n n z e i c h n e t , daß der Informationsinhalt der Informationsträger aus

-17-    VPA    80 P 6512 E

Laufzeitunterschieden der vom Informationsträger reflektierten Echos und Amplitudenunterschieden der einzelnen Echos besteht.

21. System nach einem der vorhergehenden Ansprüche,
g e k e n n z e i c h n e t    d u r c h    die
Verwendung bei der Überwachung, Steuerung und Leitung
des Straßenverkehrs.

1/3

LG

FIG 1

FIG 2

FIG 3

FIG 4

0033124

Nummer der Anmeldung

EP 81 10 0398.7

Europäisches
Patentamt

**EUROPÄISCHER RECHERCHENBERICHT**

| | **EINSCHLÄGIGE DOKUMENTE** | | | **KLASSIFIKATION DER ANMELDUNG** (Int. Cl.³) |
|---|---|---|---|---|
| Kategorie | Kennzeichnung des Dokuments mit Angabe, soweit erforderlich, der maßgeblichen Teile | | betrifft Anspruch | |
| | US - A - 4 096 477 (M. EPSTEIN et al.) <br> * Fig. 1 bis 11 * <br> -- | | 1 | G 01 S 13/80 <br><br> B 61 L 25/02 |
| | CH - A5 - 596 022 (INTERNATIONAL STAN- <br> DARD ELECTRIC CORP.) <br> * Fig.2, Position 10 * <br> -- | | 2 | |
| P,D | DE - A1 - 2 833 509 (SIEMENS AG) <br> * Fig. 1 bis 11 * <br> -- | | | |
| D | DE - A1 - 2 821 299 (SIEMENS AG) <br> * Fig. 1 bis 10 * <br> -- | | | **RECHERCHIERTE SACHGEBIETE** (Int. Cl.³) <br><br> B 61 L 25/00 <br><br> G 01 S 13/00 |
| A | DE - A1 - 2 658 669 (TOKYO SHIBAURA <br> ELECTRIC CO.) <br> * Fig. 1 bis 7 * <br> -- | | | |
| A | DE - B1 - 2 612 967 (SIEMENS AG) <br> * Fig. 1 bis 6 * <br> -- | | | |
| A | DE - B1 - 2 600 869 (SIEMENS AG) <br> * Fig. 1 * <br> ---- | | | **KATEGORIE DER GENANNTEN DOKUMENTE** <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patent-familie, übereinstimmendes Dokument |

| X | Der vorliegende Recherchenbericht wurde für alle Patentansprüche erstellt. |

| Recherchenort | Abschlußdatum der Recherche | Prüfer |
|---|---|---|
| Berlin | 07-04-1981 | BREUSING |

EPA form 1503.1 06.78